(19) Europäisches Patentamt

European Patent Office

Office européen des brevets

(11) **EP 1 619 770 A2**

(12) **EUROPÄISCHE PATENTANMELDUNG**

(43) Veröffentlichungstag:
　**25.01.2006　Patentblatt 2006/04**

(51) Int Cl.:
　*H02K 1/16* (2006.01)　　　*H02K 3/12* (2006.01)

(21) Anmeldenummer: **05013671.2**

(22) Anmeldetag: **24.06.2005**

(84) Benannte Vertragsstaaten:
　**AT BE BG CH CY CZ DE DK EE ES FI FR GB GR
　HU IE IS IT LI LT LU MC NL PL PT RO SE SI SK TR**
　Benannte Erstreckungsstaaten:
　**AL BA HR LV MK YU**

(30) Priorität: **23.07.2004　DE 102004035724**

(71) Anmelder: **MINEBEA Co., Ltd.
　Kitasaku-gun, Nagano-ken 3849-2100 (JP)**

(72) Erfinder: **Hans, Helmut, Dr.
　78112 Sankt Georgen (DE)**

(74) Vertreter: **Liesegang, Eva
　Forrester & Boehmert,
　Pettenkoferstrasse 20-22
　80336 München (DE)**

(54) **Elektrische Maschine**

(57)　Die Erfindung betrifft eine elektrische Maschine mit einem Rotor und einem Stator, der den Rotor konzentrisch umgibt, wobei der Stator einen Statorring und von dem Statorring radial nach innen abstehende Statorpole aufweist, zwischen denen Nuten zum Aufnehmen von Phasenwicklungen gebildet sind, wobei die Tiefe der Nuten in radialer Richtung im wesentlichen den dreifachen Durchmesser eines Wicklungsdrahtes der Phasenwicklungen nicht überschreitet, so daß maximal drei Lagen einer Phasenwicklung in radialer Richtung übereinander liegend in den Nuten aufnehmbar sind.

Fig. 4

**Beschreibung**

Die Erfindung betrifft eine elektrische Maschine mit einem Rotor und einem Stator, der den Rotor konzentrisch umgibt, nach dem Oberbegriff von Patentanspruch 1. Spezieller betrifft die Erfindung das Gebiet der bürstenlosen Gleichstrommotoren und insbesondere Innenläufer-Motoren oder -Generatoren. In bürstenlosen Gleichstrommotoren ist ein drehbarer Rotor mit einem konstanten Magnetfeld vorgesehen sowie ein Stator, mit dem ein rotierendes Magnetfeld erzeugt werden kann. Das rotierende Magnetfeld erzeugt ein Drehmoment, das abhängig ist vom Aufbau des Rotors und des Stators und von deren Lage zueinander. Im Stand der Technik ist es bekannt, abhängig von gewünschten Motorparametern wie Leistung, Drehmoment des Motors und dergleichen, das Verhältnis von Rotor- zu Statorparametern zu wählen. Es ist bekannt, daß das von einem Elektromotor erzeugte Drehmoment ungefähr proportional ist zu dem Durchmesser des Luftspaltes, welcher zwischen Rotor und Stator gebildet ist.

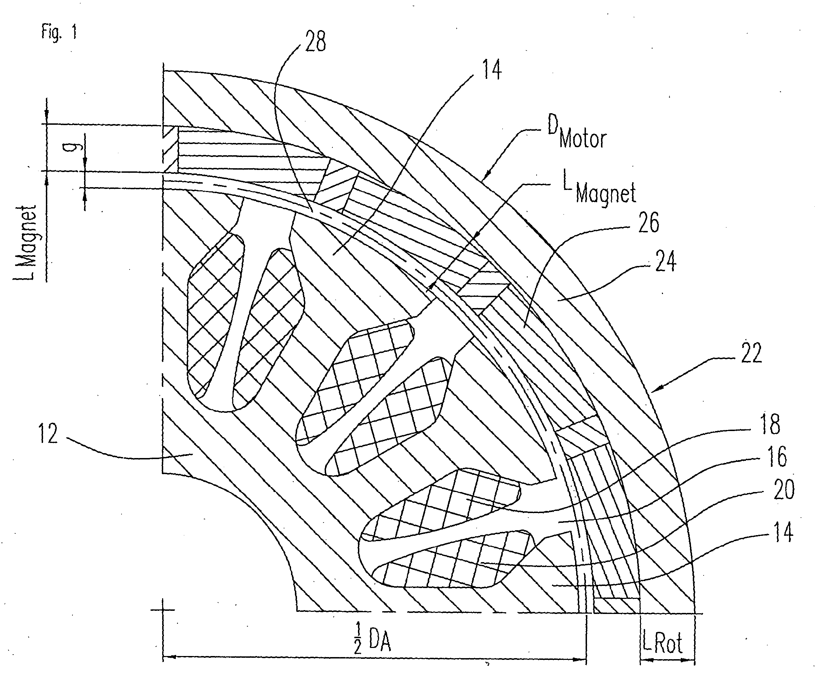

Fig. 1 zeigt beispielhaft eine Schnittdarstellung durch einen Teil eines Außenläufer-Elektromotors gemäß dem Stand der Technik. In Fig. 1 umfaßt ein Stator 10 einen Statorrückschlußring 12 sowie Statorzähne 14, welche Statornuten 16 eingrenzen. In die Statornuten sind Phasenwicklungen 18, 20 eingebracht, welche um die Statorzähne 14 gewickelt sind. Der Stator 10 ist konzentrisch in einen Rotor 22 eingefügt, welcher einen Rotorrückschluß 24 sowie Permanentmagnete 26 auf dem Innenumfang des Rotorrückschlusses 24 aufweist. Zwischen dem Stator 10 und dem Rotor 22 ist ein Luftspalt 28 gebildet. Die Weite dieses Luftspalts ist mit g bezeichnet. Der Durchmesser des Luftspaltes ist in Fig. 1 mit $D_A$ bezeichnet. Er ergibt sich aus der Differenz zwischen dem Außendurchmesser des Motors $D_{MOTOR}$ minus zweimal der Summe aus der Dicke des Rotorrückschlusses $L_{ROT}$, der Dicke der Magnete $L_{MAGNET}$ und der halben Luftspaltweite g:

$$D_A = D_{MOTOR} - 2 * (L_{ROT} + L_{MAGNET} + g/2).$$

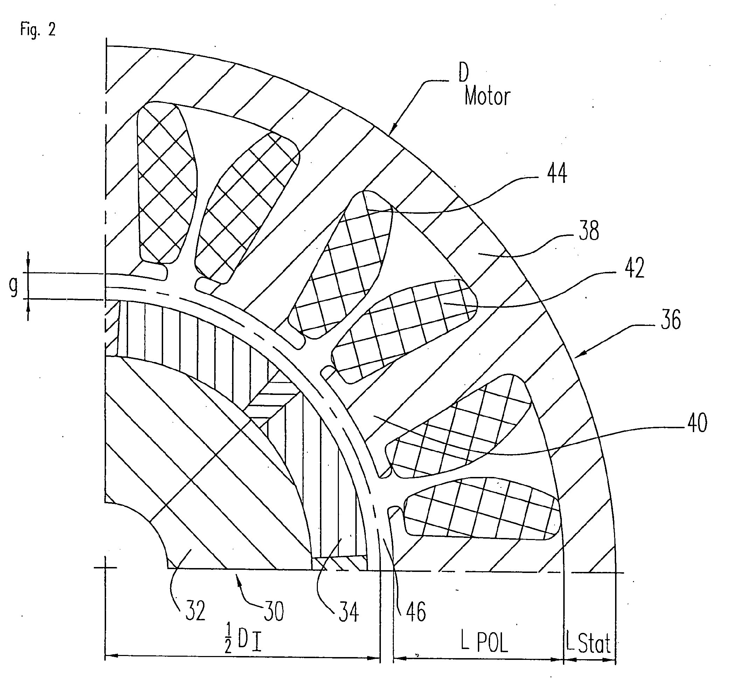

Zum Vergleich ist in Fig. 2 eine Schnittdarstellung durch einen Teil eines Innenläufermotors gemäß dem Stand der Technik dargestellt. Ein Rotor 30, der einen Rotorrückschluß 32 sowie darauf aufgebrachte Permanentmagnete 34 umfaßt, ist konzentrisch in einen Stator 36 eingefügt. Der Stator 36 ist aus einem Statorrückschlußring 38 sowie Statorzähnen 40 gebildet. Die Statorzähne 40 grenzen Nuten ein, in welche Wicklungen 42,44 eingebracht sind. Zwischen dem Rotor 30 und dem Stator 36 ist ein Luftspalt 46 gebildet, dessen Weite in Fig. 2 mit g bezeichnet ist. Der für das entstehende Drehmoment relevante Luftspaltdurchmesser $D_I$ ergibt sich aus dem Außendurchmesser des Motors, der in Fig. 2 mit $D_{MOTOR}$ bezeichnet ist minus zweimal der Summe aus der Dicke des Statorrückschlußes $L_{STAT}$, der Länge des jeweils durch einen Statorzahn 40 gebildeten Statorpols $L_{POL}$ und der halben Luftspaltweite g:

$$D_I = D_{MOTOR} - 2 * (L_{STAT} + L_{POL} + g/2)$$

Aus einem Vergleich der Figuren 1 und 2 erkennt man ohne weiteres, daß ein Außenläufer-Elektromotor bei gleichem Außendurchmesser einen größeren Luftspaltdurchmesser hat als ein Innenläufer-Elektromotor, sofern der Wickelraum beider Motoren ungefähr gleich groß ist. Ein Außenläufer-Motor kann daher bei im übrigen vergleichbaren Motorparametern ein größeres Drehmoment entwickeln. Dies beruht auf der Regel, daß die Drehmomentkonstante $K_t$ eines Elektromotors, welche das Drehmoment angibt, das pro 1A Motorstrom erzeugt wird, unter anderem proportional ist zu dem Luftspaltdurchmesser $D_I$ und der Windungszahl $N_{TURN}$:

$$K_t \approx N_{TURN} * D_I$$

Der Erfindung liegt die Aufgabe zugrunde, eine elektrische Maschine, und insbesondere einen Innenläufer-Elektromotor oder -Generator, der gattungsgemäßen Art anzugeben, die ein möglichst großes Drehmoment erzeugt.

Diese Aufgabe wird durch eine elektrische Maschine mit den Merkmalen von Patentanspruch 1 gelöst. Die Erfindung sieht somit eine elektrische Maschine der gattungsgemäßen Art und insbesondere einen Innenläufer-Elektromotor oder einen Innenläufer-Generator vor, bei dem die Tiefe der Nuten in radialer Richtung im wesentlichen den dreifachen Durchmesser eines Wicklungsdrahtes der Phasenwicklungen nicht überschreitet, so daß maximal drei Lagen einer Phasenwicklung in radialer Richtung übereinanderliegend in den Nuten aufgenommen werden können. Vorzugsweise enthält jede Nut in radialer Richtung nur eine Lage der Phasenwicklungen. Dadurch ist es möglich, einen Innenläufer-Elektromotor mit einem Stator aufzubauen, dessen Abmessungen in radialer Richtung minimal sind, wodurch bei einem gegebenen Außendurchmesser des Elektromotors der Außendurchmesser des Rotors und somit der Luftspaltdurchmesser entsprechend vergrößert werden kann. Gemäß der Beziehung:

$$K_t \approx N_{TURN} * D_I$$

kann bei einem vergrößerten Luftspaltdurchmesser trotz verringerter Windungszahl die gleiche Drehmomentkonstante erreicht werden. Die Erfindung nutzt dieses Phänomen aus und sieht einen Stator vor, dessen durch die Nuten gebildeter Wickelraum gerade noch eine, maximale drei Lagen eines Wicklungsdrahts für die Phasenwicklungen aufnimmt. Dadurch kann ein Innenläufer-Elektromotor oder -Generator geschaffen werden, der einen mindestens so großen Luftspaltdurchmesser wie ein Außenläufermotor mit gleichem Motoraußendurchmesser aufweist. Unter der Annahme, daß der Statorrückschlußring des Innenläufermotors und der Rotorrückschlußring des Außenläufermotors gleiche Dicke haben, kann sich bei dem erfindungsgemäßen Innenläufermotor in der Praxis sogar ein noch größerer Luftspaltdurchmesser ergeben, weil der ein- bis dreifache Drahtdurchmesser in der Regel kleiner sein wird als die Dicke der auf den Rotorrückschluß aufgebrachten Permanentmagnete.

Durch die im Vergleich zum Stand der Technik verringerte Windungszahl der Phasenwicklungen verringern sich bei der erfindungsgemäßen Maschine die Kupferverluste, und es kann insgesamt eine leistungsfähigere Maschine erhalten werden.

In einer bevorzugten Ausführung der Erfindung haben die Nuten im wesentlichen die Form eines zylindrischen Ausschnittes, der sich am Innenumfang des Statorrückschlußringes parallel zur Rotationsachse der Maschine erstreckt. Die Nuten können so dimensioniert sein, daß sie jeweils genau einen Wicklungsdraht einer Phasenwicklung aufnehmen. Um in tangentialer Richtung mehrere Phasenwicklungen nebeneinanderliegend aufzunehmen, können die Nuten in Form mehrerer tangential nebeneinanderliegender zylindrischer Ausschnitte, in Form von sich tangential erstreckender Ovale oder auf ähnliche Weise ausgebildet sein.

Die Erfindung ist im folgenden anhand bevorzugter Ausführungen mit Bezug auf die Zeichnungen näher erläutert. In den Figuren zeigen:

Fig. 1     eine schematische Schnittdarstellung durch einen Teil eines Außenläufermotors nach dem Stand der Technik;

Fig. 2     eine schematische Schnittdarstellung durch einen Teil eines Innenläufer-Motors nach dem Stand der Technik;

Fig. 3     eine Schnittdarstellung durch einen Elektromotor gemäß einer ersten Ausführung der Erfindung;

Fig. 4     eine Schnittdarstellung durch einen Elektromotor gemäß einer zweiten Ausführung der Erfindung.

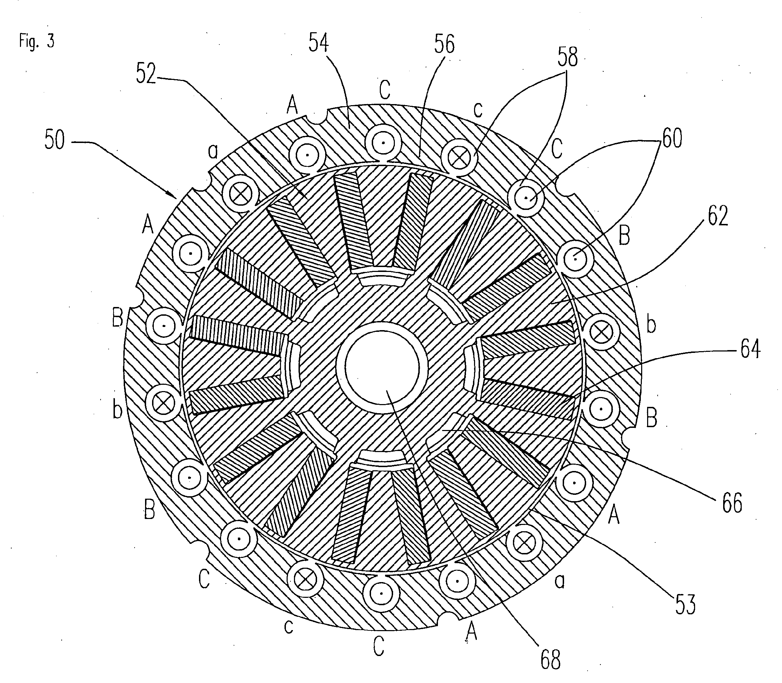

Fig. 3 zeigt eine schematische Schnittdarstellung durch einen Elektromotor gemäß einer ersten Ausführung der Erfindung. Der Motor umfaßt einen Stator 50 und einen konzentrisch in den Stator eingefügten Rotor 52. Zwischen Stator 50 und Rotor 52 ist ein Luftspalt 53 gebildet. Der Stator ist aus einem Statorrückschlußring 54 und sich von diesem radial nach innen erstreckenden Statorpolen oder Statorzähnen 56 gebildet. Die Statorzähne 56 sind so gestaltet, daß sich zwischen ihnen im wesentlichen zylindrische Nuten 58 gebildet sind, die bei der Ausführung der Fig. 3 jeweils einen einzelnen Wicklungsdraht 60 einer Phasenwicklung tragen. In Fig. 3 ist das Wickelschema durch die Buchstaben A, a, B, b, C, c erläutert, wobei A, a der Phase 1, B, b der Phase 2, und C, c der Phase 3 zugeordnet sind und wobei Groß-bzw. Kleinbuchstaben die Stromrichtung der stromdurchflossenen Wicklungen angeben. Die Stromrichtung ist in der Figur zusätzlich durch ⊙ und ⊗ dargestellt.

Der Rotor umfaßt einen Rotorkörper 62, in den Permanentmagnete 64 speichenartig eingebettet sind. Jeweils zwei der Permanentmagnete 64 sind an ihrer radial inneren Enden durch eine Aussparung 66 überbrückt. Der Rotorkörper 62 ist auf eine Welle 68 aufgebracht.

Bei der gezeigten Ausführung umfaßt der Elektromotor achtzehn Statornuten 58 und sechzehn durch die Permanentmagnete 64 gebildete Rotorpole.

Fig. 3 zeigt eine Ausführung der Erfindung, bei der in radialer Richtung nur eine Lage der Phasenwicklungen 60 auf den Stator 50 aufgebracht ist. Die Statornuten 58 sind zylinderförmig ausgebildet. Sie sind so geformt, daß sie ein Herausrutschen der Phasenwicklungen 60 aus den Statornuten 58 verhindern. Dadurch ergibt sich in radialer Richtung ein extrem dünner Aufbau des Stators 50, so daß bei einem vorgegebenen Außendurchmesser des Motors ein maximaler Spaltdurchmesser des Luftspaltes 53 erreicht werden kann. Wie oben erläutert, führt ein großer Spaltdurchmesser zu einem entsprechend großen Drehmoment des Motors, wobei durch die ein- oder weniglagige Bewicklung des Stators 50 in radialer Richtung Kupferverluste äußerst gering sind und Streuflüsse zwischen den Windungen weitgehend vermieden werden können.

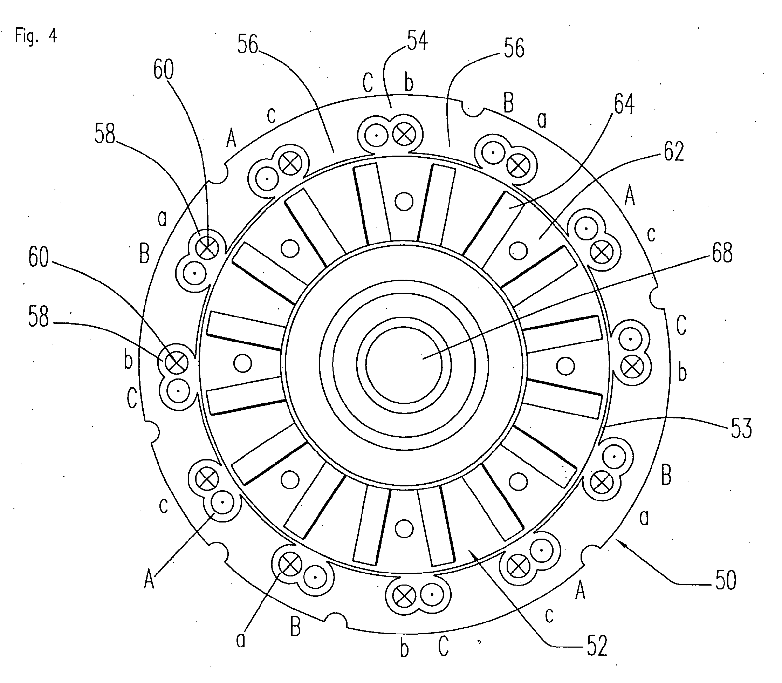

Fig. 4 zeigt eine ähnliche Darstellung wie Fig. 3 für einen Elektromotor mit zwölf Statornuten 58 und sechzehn durch die Permanentmagnete 64 gebildeten Rotorpolen. Gleiche oder korrespondierende Teile sind mit denselben Bezugszeichen wie in Fig. 3 bezeichnet. Der Rotor 52 umfaßt wiederum einen Rotorkörper 62, in welchen Permanentmagnete 64 speichenartig eingebettet sind. Der Rotor 52 ist gegebenenfalls über Zwischenringe auf eine Welle 68 aufgebracht. Zwischen dem Rotor 52 und dem Stator 50 ist ein Luftspalt 53 gebildet.

Der Stator 50 umfaßt einen Statorrückschlußring 54 sowie Statorpole, welche durch die Statorzähne 56 gebildet werden. Zwischen den Statorzähnen 56 ergeben sich die Statornuten 58, welche bei der Ausführung der Fig. 4 in Form mehrerer nebeneinanderliegender Zylinder ausgebildet sind. Dies ermöglicht im Vergleich zu der Ausführung der Fig. 3 das Einbringen von zwei oder mehr tangential nebeneinanderliegenden Wicklungen unterschiedlicher Phasen in eine Nut 58. Bei der Ausführung der Fig. 4 wäre es auch möglich, bifilare Wicklungen zu verwenden. Ein beispielhaftes Wickelschema ist in Fig. 4 durch die Buchstaben A, a, B, b, C, c dargestellt.

Während bei den Ausführungsformen der Fig. 3 und 4 in radialer Richtung des Stators 50 jeweils nur eine Wickellage vorgesehen ist, können die Statornuten 58 erfindungsgemäß auch so ausgebildet sein, daß sie in radialer Richtung bis zu drei Wickellagen aufnehmen. Wesentlicher Gesichtspunkt bei der elektrischen Maschine gemäß der Erfindung ist, daß der Stator 50 einschließlich Statorzähne 56 und Phasenwicklungen in radialer Richtung eine möglichst geringe Abmessung hat, um den Durchmesser des Luftspaltes zu maximieren. Insbesondere soll die radiale Abmessung des Stators nicht größer sein als die radiale Abmessung eines Rotors für einen Außenläufermotor mit vergleichbaren Motorparametern.

Bildet man den Rotor mit einem Ringmagnet aus und dimensioniert man den Rotorrückschluß nur so dünn wie zur Leitung der Flußlinien nötig, so ergibt sich ein relativ großer Innendurchmesser des Rotors. Dies ist vorteilhaft, um z. B. sehr dicke Wellen für eine große Tragfähigkeit des Lagers einsetzen zu können, oder auch um Rotoren mit hohler Welle gestalten zu können.

Während in den beispielhaften Ausführungen der Erfindung zylinderförmige Nuten 58 zur Aufnahme der Phasenwicklungen 60 dargestellt sind, wird der Fachmann verstehen, daß die Nuten jede andere geeignete Form haben können, beispielsweise die eines Ovals, eines Rechtecks, eines Trapezes oder dergleichen, um wenige Lagen der Phasenwicklungen in den Nuten aufzunehmen. Bevorzugt werden jedoch die Wicklungsdrähte lediglich in tangentialer Richtung nebeneinander angeordnet, wie in Fig. 4 gezeigt, um den Durchmesser des Luftspalts zu maximieren. Die in der vorstehenden Beschreibung, in den Ansprüchen und den Figuren dargestellten Merkmale können sowohl einzeln als auch in beliebiger Kombination für die Verwirklichung der Erfindung in den verschiedenen Ausgestaltungen von Bedeutung sein.

Bezugszeichenliste

| 10 | Stator |
|---|---|
| 12 | Statorrückschlußring |
| 14 | Statorpole |
| 16 | Statornuten |
| 18, | 20 Phasenwicklungen |
| 22 | Rotor |
| 24 | Rotorrückschlußring |
| 26 | Permamentmagnete |
| 28 | Luftspalt |
| 30 | Rotor |
| 32 | Rotorrückschluß |
| 34 | Permanentmagnete |
| 36 | Stator |
| 38 | Statorrückschlußring |
| 40 | Statorzähne |
| 42,44 | Wicklungen |
| 46 | Luftspalt |
| 50 | Stator |
| 52 | Rotor |
| 53 | Luftspalt |
| 54 | Statorrückschlußring |
| 56 | Statorpole oder Statorzähne |
| 58 | Nuten |

| 60 | Wicklungsdraht, Phasenwicklungen |
| 62 | Rotorkörper |
| 64 | Permanentmagnete |
| 66 | Aussparung |
| 68 | Welle |

**Patentansprüche**

1. Elektrische Maschine mit einem Rotor (52) und einem Stator (50), der den Rotor (52) konzentrisch umgibt, wobei der Stator (50) einen Statorring (54) und von dem Statorring (54) radial nach innen abstehende Statorpole (56) aufweist, zwischen denen Nuten (58) zum Aufnehmen von Phasenwicklungen (60) gebildet sind, **dadurch gekennzeichnet, daß** die Tiefe der Nuten (58) in radialer Richtung im wesentlichen den dreifachen Durchmesser eines Wicklungsdrahtes der Phasenwicklungen (60) nicht überschreitet, so daß maximal drei Lagen einer Phasenwicklung (60) in radialer Richtung übereinander liegend in den Nuten (58) aufnehmbar sind.

2. Elektrische Maschine nach Anspruch 1, **dadurch gekennzeichnet, daß** die Tiefe der Nuten (58) in radialer Richtung im wesentlichen den einfachen Durchmesser des Wicklungsdrahtes nicht überschreitet.

3. Elektrische Maschine nach Anspruch 2, **dadurch gekennzeichnet, daß** die Nuten (58) im wesentlichen die Form eines zylindrischen Ausschnittes haben, um jeweils einen Wicklungsdraht aufzunehmen.

4. Elektrische Maschine nach Anspruch 1 oder 2, **dadurch gekennzeichnet, daß** die Nutenbreite in Umfangsrichtung des Stators (50) derart bemessen ist, daß eine Nut (58) mehrere Wicklungsdrähte tangential nebeneinander liegend aufnimmt.

5. Elektrische Maschine nach Anspruch 4, **dadurch gekennzeichnet, daß** die Nuten (58) im wesentlichen die Form mehrerer tangential nebeneinander liegender zylindrischer Ausschnitte haben.

6. Elektrische Maschine nach Anspruch 4, **dadurch gekennzeichnet, daß** die Nuten (58) im wesentlichen die Form sich tangential erstreckender Ovale haben.

7. Elektrische Maschine nach einem der vorangehenden Ansprüche, **dadurch gekenn - zeichnet**, daß die Phasenwicklungen (60) durch bifilare Wicklungsdrähte gebildet sind.

8. Elektrische Maschine nach einem der vorangehenden Ansprüche, **dadurch gekenn - zeichnet**, daß der Rotor (52) einen Rotorkörper (62) und in den Rotorkörper (62) eingebettete Permanentmagnete (64) aufweist, welche sich speichenartig durch den Rotorkörper (62) erstrecken.

Fig. 1

Fig. 2

Fig. 3

Fig. 4